(19)

Europäisches
Patentamt

European
Patent Office

Office européen
des brevets

(11)  **EP 4 239 168 B1**

(12)  **EUROPEAN PATENT SPECIFICATION**

(45) Date of publication and mention
of the grant of the patent:
**09.10.2024  Bulletin 2024/41**

(21) Application number: **23177411.8**

(22) Date of filing: **19.10.2016**

(51) International Patent Classification (IPC):
**F01M 9/02** *(2006.01)*      **F01M 1/08** *(2006.01)*
**F01M 1/12** *(2006.01)*      **F01M 11/02** *(2006.01)*
**F01M 11/10** *(2006.01)*

(52) Cooperative Patent Classification (CPC):
**F01M 9/02; F01M 11/10;** F01M 2001/083;
F01M 2001/123; F01M 2011/022; F01M 2250/62;
F01M 2250/64; F16N 2270/54

(54) **METHOD AND APPARATUS FOR PREPARING AN OIL TO BE SUPPLIED TO THE CYLINDERS OF A TWO-STROKE CROSSHEAD ENGINE**

VERFAHREN UND VORRICHTUNG ZUR AUFBEREITUNG EINES ÖLS ZUR VERSORGUNG DER ZYLINDER EINES ZWEITAKT-KREUZKOPFMOTORS

PROCÉDÉ ET DISPOSITIF POUR LA PRÉPARATION D'UNE HUILE DESTINÉE À ÊTRE FOURNIE AUX CYLINDRES D'UN MOTEUR À CROSSE À DEUX TEMPS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **20.10.2015  DK PA201500647**

(43) Date of publication of application:
**06.09.2023  Bulletin 2023/36**

(62) Document number(s) of the earlier application(s) in
accordance with Art. 76 EPC:
**16856963.0 / 3 365 539**

(73) Proprietor: **A.P. Møller - Mærsk A/S**
**1263 Copenhagen K (DK)**

(72) Inventors:
• **OLSSON, Martin**
**1263 Copenhagen K (DK)**
• **BAK WEIMAR, Henrik**
**1263 Copenhagen K (DK)**
• **EMBLETON, Mark**
**1263 Copenhagen K (DK)**

(74) Representative: **EIP**
**Fairfax House**
**15 Fulwood Place**
**London WC1V 6HU (GB)**

(56) References cited:
EP-A1- 2 767 578        WO-A1-2006/069572
WO-A2-2008/073415     US-A1- 2003 196 632

EP 4 239 168 B1

**Description**

This application is divided from European patent application number 16856963.0.

TECHNICAL FIELD

The disclosure relates to a method for preparing an oil to be supplied to the cylinders of a two-stroke crosshead engine, in particular to a method for preparing such an oil on board of the marine vessel where the internal combustion engine is installed or on site at a power plant where the engine is used as a prime mover and to an apparatus for preparing an oil to be supplied to the cylinders of a two-stroke crosshead engine.

BACKGROUND

Of the oils that are used in the lubrication of a large two-stroke compression ignited internal combustion engine two stand out and are very different in chemical composition and physical properties from one another. The oil used in the crankcase lubrication system is referred to as system oil, and lubricates and cools the main, bottom end and crosshead bearings, the crosshead slippers, camshaft, bearings and followers, and the chain or gear drive. On modern engines the oil is also used to cool the piston undersides. The system oil is in general never fully replaced, but topped up over time to maintain its condition.

The oil used to lubricate the piston rings as they reciprocate in the cylinder liner and to neutralise the acids formed in the combustion chamber by the combustion of sulphur in the fuel is referred to as cylinder oil. However, this oil is also denoted as the oil to be supplied to the cylinders.

Acid neutralisation is a critical property to protect the inner surface of the cylinder liner from the acids generated during combustion. The cylinder lubrication oil is a total-loss oil since it is consumed through combustion and scraped down in the lubrication process. The cylinder oil is depleted with each revolution of the main engine and replaced by fresh oil cylinder through intermittent injections.

The oil that is supplied to the cylinders usually has an SAE (society of automotive engineering) viscosity equivalent grade of 50 and can have any total base number (TBN) between 5 and 150 for the neutralization of acid products generated during the combustion process. The TBN reflects the oil's reserve alkalinity, i.e. its ability to neutralize acidic materials. The TBN of an oil can e.g. be determined in accordance with the ASTM D2896 standard, which is a standard test method for base number of petroleum products by potentiometric perchloric acid titration.

Typically system oil has an SAE viscosity grade of 30 with a relatively low TBN that is typically below 10.

These values are though merely by way of example, and may vary depending on the actual application-specific design of the systems that the oils are used in.

In recent years, there has been a trend towards blending the oil for delivering to the cylinders of the main engine on board the marine vessel where the main engine is installed. Hereto, used system oil is withdrawn from the crankcase lubrication system and blended with a TBN agent or with a fresh cylinder oil with a high TBN to create a cylinder oil with the appropriate lubrication characteristics (it is noted that there is no clear technical difference between a TBN agent that comprises one or more alkaline additives in oil and a fresh cylinder oil).

In recent years two-stroke crosshead engines have been operated for a large portion of their operation time at an engine load that is significantly below their maximum continuous rating. This is due to the fact that many freight ship companies choose to sail slower (slow steaming) than before, which results in the main engines being operated well below the maximum continuous rating, since these marine vessels were originally constructed to sail at significantly higher speed.

The viscosity of the cylinder oil specified for a particular engine is generally selected such that the actual viscosity (dynamic (shear) viscosity) at the temperature of the cylinder liner where the cylinder oil is applied is optimal for the cylinder liner temperature at maximum engine load (100% maximum continuous rating), i.e. sufficiently high for providing a proper lubrication of the piston rings against the inner surface of the cylinder liner at maximum engine load.

The viscosity of a cylinder oil in operation is affected by a number of factors. As temperature increases, the viscosity of a fluid decreases, and vice-versa. During the operation of a two-stroke crosshead engine the temperature varies according to engine load and RPM (revolutions per minute). As engine load and RPM increase, the temperature also increases and hence the viscosity of the lubricating oil decreases.

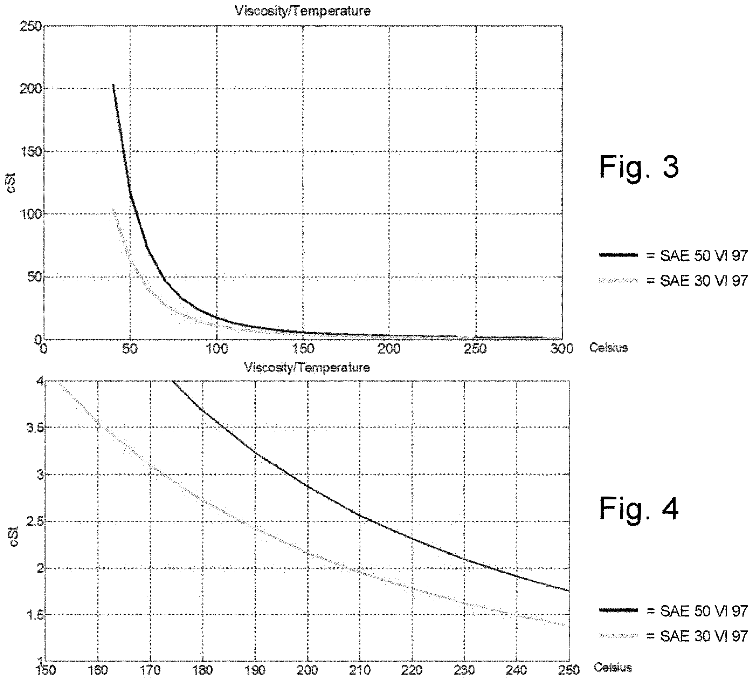

Cylinder oil prepared in accordance with the above blend on board method typically (like any typical conventional cylinder oil) has a relatively low viscosity index (mono grade type oil), i.e. they have a relative large change in viscosity with temperature. Figs. 3 and 4 illustrate the relation between temperature and viscosity in centistokes (cSt) by way of example for a SAE 30 oil and an SAE 50 oil, both having a Viscosity Index (VI) of 97.

For a typical two-stroke crosshead engine the oil delivered to the cylinders should have a viscosity between approximately 1.5 and 3 cSt at the temperature of the cylinder liner. In such an engine, the cylinder liner temperature at the maximum continuous rating of the engine (maximum load) will typically be well above 200°C, e.g. 240 to 250°C. As can be seen in Fig. 4, this results in an effective viscosity for the SAE 50 oil at the temperature of the cylinder liner of just below 2 cSt, i.e. within the specified range of 1.5 to 3 cSt.

Present dosage regimes for cylinder oil are based on fuel sulphur content, i.e. a cylinder oil with a high TBN used when the engine runs on fuel with a high sulphur content and a cylinder oil with a lower TBN is used when the engine is running on fuel with less sulphur. Some engine manufacturers/developers recommend a BN 70 cylinder oil when running on heavy fuel oil with more than 1.5% sulphur content and recommend a BN-40-50 cylinder oil when running on heavy fuel oil with less than 1.5% sulphur content. The feed rate of electronically controlled cylinder lubrication devices is typically proportional to the load, e.g. some engine manufacturers/developers recommend 0.7-0.8 g/kWh, others 0.65 g/kWh.

In known engines where the blending of the oil for delivering to the cylinders of the main engine is done locally by e.g. blending used oil with a TBN agent or a cylinder oil with a high TBN to create a cylinder oil with the appropriate lubrication characteristics the same principles are applied, i.e. the feed rate is proportional to the engine load and the TBN is selected in relation to sulphur content of the heavy fuel oil. For engines that use locally blended cylinder oil it is possible to react quicker to changes in the fuel sulphur content of the fuel since the TBN of the oil supplied to the cylinders can be readily adjusted in accordance with need.

The costs associated with cylinder oil form a significant part of the operating cost of an engine in e.g. a marine vessel or in a power plant.

US 2004/144355 discloses a marine diesel engine system including a diesel engine having a plurality of cylinders. The system also includes, proximate the engine, a primary engine lubricant and an additive selected from certain alkylamine-alkylphosphates, 500 TBN calcium sulfonate and mixtures thereof. A means for blending the lubricant and additives into a mixture for introduction into a cylinder is provided. Thus lubricant properties may be modified depending upon engine conditions. Either of the sulphur content of the fuel or the sum of the temperature of the engine are used to modify the properties of the lubricant.

EP 2767578 A1 relates to a process for the production of a cylinder oil comprising providing a used oil, providing a fresh cylinder oil, and blending the used oil with the fresh cylinder oil, wherein the used oil has a lower TBN value than the fresh cylinder oil.

WO 2008/073415 A2 relates to a method for detecting leaks in a stuffing box of a two-stroke engine.

WO 2006/069572 A1 relates to a method for reducing fuel consumption in a two-stroke engine, comprising obtaining system oil/consumable system oil and adding at least one friction modifier to at least a part of the obtained system oil/consumable system oil.

US 2003/196632 A1 relates to a method to employ instrumentation to effectuate variation in lubrication flow rate or properties in response to actual engine conditions.

SUMMARY

Based upon this background it is an object to deliver cylinder oil with properties that accurately match the actual lubrication and actual chemical protection needs of the cylinders of the engine under the actual operating conditions of the engine.

This object is achieved in accordance with a 1 st aspect by providing a method for controlling supply of cylinder oil containing a base to a cylinder of a running large two-stroke crosshead engine, said large two-stroke crosshead engine having cylinders comprising a cylinder liner with a reciprocating piston therein, said method comprising:

- feeding said cylinder oil to said cylinder at a variable and controllable cylinder oil feed rate and with a variable and controllable basicity (TBN),

- adjusting the variable cylinder oil feed rate to an actual lubrication need of the inner surface of the cylinder liner,

- adjusting a total amount of detergent in the cylinder oil to an actual need for a presence of detergent in the cylinder liner, and

- adjusting a capacity to neutralize acidic combustion products in the cylinder resulting from actual cylinder oil feel rate and basicity (TBN) by adjusting the basicity of the cylinder oil to the actual need of the inner surface of said cylinder liner for protection against acidic combustion products in the cylinder liner.

By defining a clear split between the actual lubrication needs of the cylinders on one hand and the actual need of the cylinders for protection against acidic combustion products on the other end, and by preparing a cylinder oil that matches each of these actual needs it becomes possible to provide a cylinder oil that delivers the exact required amount needed of acid neutralizing substance to the cylinders and at the same time deliver the exact amount of oil needed for lubrication purposes under all engine operating conditions. Thus, delivering too much acid neutralizing substance is avoided, thereby avoiding incurring unnecessary costs for acid neutralizing substances and avoiding deposits on engine pistons, piston rings, cylinder liners and other engine components. Delivering too little as it neutralizing substance is also avoided thereby avoiding chemical wear of the inner surface of the cylinder liner. Delivering too little oil for lubrication purposes is avoided thereby avoiding unnecessary mechanical wear. Delivering too much oil for lubrication purposes is also avoided, thereby avoiding unnecessary increase friction and unnecessary costs for oil.

According to a first possible implementation of the first aspect determining the actual lubrication need of said inner surface of the cylinder liner, said determination of the actual lubrication need preferably being based on the tribological requirements of the reciprocating piston and inner surface of the cylinder liner and even more preferably taking into account the role of the cylinder oil in reducing mechanical wear of the inner surface of the cylinder liner and reducing friction between the cylinder liner and the reciprocating piston.

According to a second possible implementation of the first aspect the method further comprises determining the actual need of the inner surface of the cylinder liner for protection against acidic combustion products in the cylinder liner, said determination of the actual need of the inner surface of the cylinder liner for protection against acidic combustion products in the cylinder liner preferably being based on the sulfur content of the fuel combusted in said cylinder and the actual load of the engine.

According to a third possible implementation of the first aspect the method comprises preparing said cylinder oil by blending a base oil with a first basicity with a product having a second basicity, said second basicity being higher than said first basicity.

According to a fourth possible implementation of the first aspect the basicity of said cylinder oil is adjusted by adjusting the blending ratio between said base oil and said product.

According to a fifth possible implementation of the first aspect said product is a basicity increasing additive, or a basicity increasing additive package comprising an oil and basicity increasing additive.

According to a sixth possible implementation of the first aspect said cylinder oil feed rate is controlled by a cylinder oil pump that intermittently injects a precisely dosed amount of cylinder oil into said cylinder.

According to a seventh possible implementation of the first aspect said cylinder oil feed rate is controlled by a cylinder oil pump that injects a continuous flow of cylinder oil with a precisely controlled flow rate into said cylinder.

According to an eighth possible implementation of the first aspect said cylinder oil pump injects a precisely dosed amount of cylinder oil every number of engine revolutions, said number of engine revolutions preferably being in the range between 0,5 and 14.

According to a ninth possible implementation of the first aspect said cylinder oil feed rate is expressed as weight per time unit, volume or weight per engine revolution, or volume or weight per engine revolution and cylinder inner surface area.

According to a tenth possible implementation of the first aspect said capacity to neutralize acidic combustion products in said cylinder liner is expressed as weight of potassium hydroxide per time unit or weight of potassium hydroxide per injected weight of fuel, preferably taking into account the sulfur content of the fuel.

According to an eleventh possible implementation of the first aspect said cylinder oil feed rate is adjusted independently from the necessity of the cylinder oil and wherein the basicity of the cylinder oil is adjusted taking into account the actual cylinder oil feed rate.

According to a twelfth possible implementation of the first aspect further comprising controlling the cylinder feed rate exclusively in accordance with the lubrication needs of the inner surface of the cylinder liner.

According to a thirteenth possible implementation of the first aspect the cylinder oil feed rate is a function of the rotational speed of said engine.

According to a fourteenth possible implementation of the first aspect said capacity to neutralize acidic combustion products in said cylinder is a function of both the sulfur content of the fuel supplied to the cylinders and the load of the engine.

According to a fifteenth possible implementation of the first aspect said feed rate of cylinder oil is an average feed rate over a plurality of engine revolutions as volume or mass per time unit.

According to a sixteenth possible implementation of the first aspect said feed rate of said base is an average feed rate over a plurality of engine revolutions as volume or mass per time unit.

According to a seventeenth possible implementation of the first aspect said need for lubrication of the inner wall of the cylinder liners is determined by friction and wear.

According to a eighteenth possible implementation of the first aspect said chemical wear comprises corrosion and wherein said mechanical wear comprises abrasion.

According to a nineteenth possible implementation of the first aspect the method further comprises controlling the viscosity of the cylinder oil, said viscosity being a function of the cylinder liner temperature, preferably at a position close to the cylinder cover.

According to a twentieth possible implementation of the first aspect the method further comprises blending a viscosity agent with said base oil for adjusting the viscosity of the cylinder oil to the actual lubrication need of said inner surface of said cylinder liner.

According to a twenty first possible implementation of the first aspect the adjusting the total amount of detergent in the cylinder oil comprises blending one or more lubricant detergents with the base oil. This is performed, for example, to balance between deposit control and acidic combustion products neutralization according to fuel type and sulfur content. The one or more lubricant detergents preferably comprises neutral and/or base detergents. In examples, the one or more lubricant detergents comprises one or more sulfonates, salicylates, phenates, sulphophenates, or Mannich-bases.

According to a twenty second possible implementation of the first aspect the method further comprises detecting revolutions of said crankshaft.

According to a twenty third possible implementation of the first aspect the method further comprises detecting the rotational speed of said crankshaft.

According to a twenty fourth possible implementation of the first aspect the cylinder oil feed rate is a predetermined amount per revolution of said crankshaft.

According to a twenty fifth possible implementation of the first aspect said predetermined amount per revolution of the crankshaft is adjusted in accordance with the expression

$$Feedrate = k \times rpm^p + m,$$

wherein k is an engine specific constant,
wherein p is an engine specific constant, and
wherein m is a minimum amount to be injected regardless of engine operating conditions.

According to a twenty sixth possible implementation of the first aspect p is 1 and k is not zero and so that the predetermined amount per revolution of the crankshaft is a fixed amount per revolution to which the minimum amount to be injected is added.

According to a twenty seventh possible implementation of the first aspect the method further comprises detecting revolutions of said crankshaft and/or detecting rotational speed of said crankshaft.

According to a twenty-eighth possible implementation of the first aspect the adjustment of said feed rate is over the full load range of the engine, or over the full rotational speed range of the crankshaft.

According to a twenty ninth possible implementation of the first aspect the engine load is used to determine or estimate an actual cylinder liner temperature.

According to a thirtieth possible implementation of the first aspect said product is a fresh cylinder oil or a used oil, said used oil being for example used system oil withdrawn from said crankcase lubrication system.

According to a thirty first possible implementation of the first aspect blending said base oil with said product is a batch wise process or an in line blending process.

According to a thirty second possible implementation of the first aspect comprising determining a desired viscosity for the cylinder oil at a measured or determined cylinder liner temperature.

According to a thirty third possible implementation of the first aspect preparing a second oil comprises blending said base oil with a basicity agent and with a viscosity agent to obtain a basicity and viscosity adjusted cylinder oil.

According to a thirty fourth possible implementation of the first aspect said viscosity adjusting agent comprises fresh cylinder oil, preferably a fresh cylinder oil with a high TBN, such as for example a TBN above 60 and with a high kinematic viscosity, preferably a kinematic viscosity of 16 mm2/s or more at 100 °C, preferably 18mm2/s or more at 100 °C and most preferably of 19 mm2/s or more at 100 °C.

According to a thirty fifth possible implementation of the first aspect cylinder oil prepared with the method according to the first aspect and the implementations thereof preferably has a kinematic viscosity of 14 mm2/s or more at 100 °C, more preferably of 15 mm2/s or more at 100 °C, even more preferably of 16 mm2/s or more at 100 °C and most preferably of 17 mm2/s or more at 100 °C.

According to a thirty sixth possible implementation of the first aspect said method is carried out aboard a marine vessel or on a site in which the two-stroke crosshead engine (1) is installed.

The object above is also achieved according to a second aspect by providing an apparatus for supplying a cylinder oil containing a base to a cylinder of a running large two-stroke crosshead engine, said large two-stroke crosshead engine having cylinders comprising a cylinder liner with a reciprocating piston therein, said apparatus comprising:

- a system configured for feeding said cylinder oil to said cylinder at a variable and controllable cylinder oil feed rate and with a variable and controllable basicity (TBN),

- a capacity to neutralize acidic combustion products in said cylinder resulting from the actual cylinder oil feed rate and basicity (TBN),

- an electronic control unit configured to: adjust the variable cylinder oil feed rate to an actual lubrication need of the inner surface of the cylinder liner, adjust a total amount of detergent in the cylinder oil to an actual need for a presence of detergent in the cylinder liner, and adjust a capacity to neutralize acidic combustion products in the cylinder by adjusting the basicity of the cylinder oil to an actual need of the inner surface of said cylinder liner for protection against acidic combustion products in said cylinder liner.

According to a first possible implementation of the second aspect said electronic control unit is configured to determine the actual lubrication need of said inner surface of the cylinder liner, said determination of the actual lubrication need preferably being based on the tribological requirements of the reciprocating piston and inner surface of the cylinder liner and even more preferably taking into account the role of the cylinder oil in reduce mechanical wear of the inner surface of the cylinder liner and producing friction between the cylinder liner and the reciprocating piston.

According to a second possible implementation of the second aspect said electronic control unit is configured to determine the actually needed capacity to neutralize acidic combustion products in the cylinder liner, said determination of the capacity to neutralize acidic combustion process in the cylinder preferably being based on the sulfur content of the fuel combusted in said cylinder and the actual load of the engine.

According to a third possible implementation of the second aspect the engine further comprises a blender configured for blending a base oil with a first basicity with a product having a second basicity, said second basicity being higher than said first basicity.

According to a fourth possible implementation of the second aspect said electronic control unit is configured to adjust the basicity of said cylinder oil by adjusting the blending ratio between said base oil and said product.

According to a fifth possible implementation of the second aspect the apparatus further comprises a sensor arrangement for detecting revolutions of said crankshaft and/or comprising a sensor arrangement for detecting rotational speed of said crankshaft.

According to a sixth possible implementation of the second aspect the apparatus further comprises a cylinder oil dosage pump (55) for feeding said cylinder oil to the cylinders of said engine (1), and wherein said electronic control unit is configured to control the feed rate of said cylinder dosage pump (55) in response to the engine load, preferably proportionally to the engine load.

According to a seventh possible implementation of the second aspect the apparatus further comprises a source of viscosity agent, and said controllable blender being configured to blend said first oil, said TBN increasing agent and said viscosity agent in individually controllable ratios to prepare the second oil.

According to an eighth possible implementation of the second aspect said electronic control unit is connected to said controllable blender, said electronic control unit further being configured to determine the amount or proportion of viscosity agent to be blended into the second oil in order to obtain an oil with the desired viscosity, and said electronic control unit being configured to control said controllable blender accordingly.

According to a ninth possible implementation of the second aspect said blender is an integral blender that is configured for blending the first oil, the high TBN oil or the high TBN agent and the viscosity agent, preferably in a batch wise process.

This object above is also achieved in accordance with a third aspect by providing a method according to the first aspect, the method further comprising - obtaining, determining or estimating the actual cylinder liner temperature, obtaining, determining or estimating the sulphur content of the fuel used by the engine, providing a base oil with a first TBN, such as for example used oil, providing a TBN increasing product with a second TBN higher than the first TBN, blending the first oil with the product in a controlled ratio to prepare the cylinder oil, adjusting the TBN of the cylinder oil by adjusting the blending ratio of base oil (60) and product (61), and controlling the TBN of the cylinder oil in response to the actual sulphur content of the fuel used by the engine (1) and in response to the obtained, determined or estimated cylinder liner temperature by controlling the TBN of the cylinder oil at least for cylinder liner temperatures or engine loads above a first threshold at a level that decreases with increasing engine load and increases with decreasing engine load.

The inventors realized that a constant TBN regardless of engine load is not always optimal. In particular, the inventors have arrived at the insight that the TBN of the cylinder oil can be lowered at high cylinder liner temperatures that typically occur at high engine loads. By supplying cylinder oil to the cylinders with a lower TBN at higher cylinder liner temperatures costs for TBN increasing agents are reduced and deposits from unconsumed TBN additives are avoided or at least reduced.

In a first possible implementation form of the third aspect the method further comprises determining a desired TBN for the cylinder oil taking into account the actual sulphur content of the fuel used by the engine (1) and taking into account the actual engine load, and controlling the controllable blender to blend the base oil with the TBN increasing agent at a blending ratio that results in a cylinder oil for supplying to the cylinders with the desired TBN.

In a second possible implementation form of the third aspect the first threshold preferably being an engine load of approximately 50% to 60% of the maximum continuous rating of the engine.

In a third possible implementation form of the third aspect the method further comprises controlling the TBN of the cylinder oil for supplying to the cylinders at least for engine loads above a second threshold at a level that proportionally decreases with increasing engine load and proportionally increases with decreasing engine load with the second threshold preferably being an engine load of approximately 50% of the maximum continuous rating of the engine.

In a fourth possible implementation form of the third aspect the base oil is a fresh oil or a used oil, the used oil being for example used system oil withdrawn from the crankcase lubrication system.

In a fifth possible implementation form of the third aspect the TBN increasing product is an additive, an additive package, an oil or a cylinder oil with a TBN higher than the TBN of the base oil.

In a sixth possible implementation form of the third aspect the method further comprises controlling the feed rate to the cylinders of the cylinder oil prepared by blending in response to the engine load, preferably controlling the feed rate proportionally to the engine load.

In a seventh possible implementation form of the third aspect blending the base oil with a TBN increasing product is a batch wise process or an in line blending process.

It is a further object to avoid operating the two-stroke crosshead engine with a cylinder oil that is delivered to the cylinders with a viscosity that is higher than required at the actual temperature of the cylinder liner.

This further object is achieved in accordance with the eighth possible implementation form of the third aspect, wherein the method further comprises determining or estimating the actual cylinder liner temperature of the cylinder liners of the engine (1), and determining a desired viscosity for the oil that is supplied to the cylinders at the determined cylinder liner temperature.

In a ninth possible implementation form of the third aspect preparing a cylinder oil comprises blending the base oil with a TBN increasing product agent and with a viscosity agent to obtain a TBN and viscosity adjusted oil for supplying to the cylinders.

With this method the viscosity can be freely adjusted to an optimized combination to match engine design, engine performance and engine load. The system can either be blending directly (in line blending) to each unit or blending to a day tank as batch blending.

In a tenth possible implementation form of the third aspect blending the prepared oil with the viscosity agent is an in line blending process. The advantage of in-line blending is that the blends can be quickly adjusted to changes of engine load by adjusting the viscosity accordingly.

In an eleventh possible implementation form of the third aspect preparing an oil for supplying to the cylinders comprises blending the base oil with a TBN increasing product agent, such as e.g. a high TBN oil.

In a twelfth possible implementation form of the third aspect blending the base oil with a TBN agent or with a high TBN oil is a batch wise process.

In a thirteenth possible implementation form of the third aspect determining the amount of viscosity agent to be added comprises calculating manually using a defined methodology or determining using computer software programmed with appropriate algorithms or equations.

In a fourteenth possible implementation form of the third aspect the viscosity adjusting agent comprises fresh cylinder oil, preferably a fresh cylinder oil with a high TBN, such as for example a TBN above 60.

In a fifteenth possible implementation form of the third aspect the viscosity modifying agent comprises a lubricating oil such as a trunk piston engine oil, gear, hydraulic or turbine oil, base oil, recycled oil, or a high viscosity additive.

In an sixteenth possible implementation form of the third aspect determining a desired viscosity for the cylinder oil comprises calculating manually using a defined methodology or determining using computer software programmed with appropriate algorithms or equations a desired viscosity for the cylinder oil for use in the cylinders at the determined actual cylinder liner temperature.

In a seventeenth possible implementation form of the third aspect determining the actual cylinder liner temperature comprises measuring the actual cylinder liner temperature at a defined point or averaged across the surface of the liner with a sensor in or at the cylinder liner surface.

In a eighteenth possible implementation form of the third aspect determining the actual cylinder liner temperature comprises obtaining the actual engine load and RPM (revolutions per minute) and deriving an estimated cylinder liner temperature from the obtained engine load and RPM.

In a nineteenth possible implementation form of the third aspect deriving an estimated cylinder liner temperature comprises calculating manually using a defined methodology or determining using computer software programmed with appropriate algorithms or equations using the engine load as the basis for calculating the estimated cylinder liner temperature.

In a twentieth possible implementation form of the third aspect determining the actual cylinder liner temperature comprises obtaining the actual cylinder jacket cooling water temperature and deriving an estimated cylinder liner temperature from the obtained cylinder jacket cooling water temperature.

In a twenty-first possible implementation form of the third aspect the method further comprises determining or obtaining a desired TBN value for the cylinder oil t, and applying a TBN modifying agent in the prepared oil to adjust the TBN of the cylinder oil to the desired TBN value. With this feature the alkalinity (TBN) of the oil can be freely adjusted to match the fuel sulphur level, engine design, engine performance and engine load.

The object above is also achieved according to a fourth aspect by providing an apparatus according to the second aspect, the apparatus comprising a source of base oil with a first TBN, such as for example used oil, a source of TBN increasing product with a second TBN higher than the first TBN, a controllable blender configured to blend the base oil with the product in a controllable blending ratio to prepare the cylinder oil, an electronic control unit associated with the apparatus, the electronic control unit being informed of the actual cylinder liner temperature of the cylinders or of an estimate thereof, and of the sulphur content of the fuel used by the engine, the electronic control unit being configured to adjust the TBN of the cylinder oil by adjusting the blending ratio of the base oil and the product, the electronic control unit being configured to control the TBN of the cylinder oil prepared with the controllable blender in response to the actual sulphur content of the fuel used by the engine and in response to the information on the actual engine load, and the electronic control unit being configured to control the TBN of the cylinder oil at least for cylinder liner temperatures or engine loads above a second threshold at a level that decreases with increasing engine load and increases with decreasing engine load, and the electronic control unit is configured to control the TBN of the cylinder oil at least for cylinder liner temperatures or engine loads above a second threshold at a level that decreases with increasing engine load and increases with decreasing engine load.

In a first possible implementation form of the fourth aspect information on the actual cylinder liner temperature is a measured temperature, a determined temperature or an estimated temperature, preferably a temperature estimated from the actual engine load.

In a second possible implementation form of the fourth aspect the electronic control unit is configured to determine a desired TBN for the cylinder oil taking into account the actual sulphur content of the fuel used by the engine and taking into account the actual engine load, and wherein the electronic control unit is configured to control the controllable blender to blend the base oil with the TBN increasing product at a blending ratio that results in a cylinder oil with the desired TBN.

In a third possible implementation form of the fourth aspect the electronic control unit is configured to control the TBN of the cylinder oil at a first TBN for cylinder liner temperatures or engine loads below a first threshold and to control the TBN of the oil for supplying to the cylinders at a second TBN lower that the first level for engine loads above the first threshold, the first threshold preferably being an engine load of approximately 50% to 60% of the maximum continuous rating of the engine.

In a fourth possible implementation form of the fourth aspect the second threshold is an engine load of approximately 50% of the maximum continuous rating of the engine.

In a fifth possible implementation form of the fourth aspect the electronic control unit is configured to control the TBN of the cylinder oil at least for cylinder liner temperatures or engine loads above a second threshold at a level that proportionally decreases with increasing engine load and proportionally increases with decreasing engine load, the second threshold preferably being an engine load of approximately 50% of the maximum continuous rating of the engine.

In a sixth possible implementation form of the fourth aspect the base oil is a fresh oil or a used oil, the used oil being for example used system oil withdrawn from the crankcase lubrication system.

In a seventh possible implementation form of the fourth aspect the TBN increasing product is an additive, an additive package, an oil or a cylinder oil.

In an eighth possible implementation form of the fourth aspect the apparatus further comprises a cylinder oil dosage pump for feeding the cylinder oil for the cylinders of the engine, and wherein the electronic control unit is configured to control the feed rate of the cylinder oil dosage pump in response to the engine load, preferably proportionally to the engine load.

In a ninth possible implementation form of the fourth aspect the method further comprises a source of viscosity agent, and the controllable blender being configured to blend the base oil, the TBN increasing product and the viscosity agent in individually controllable ratios to prepare the cylinder oil to the cylinders.

In a tenth possible implementation form of the fourth aspect the electronic control unit is connected to the controllable blender, the electronic control unit further being configured to determine the amount or proportion of viscosity agent to be blended into the cylinder oil in order to obtain a cylinder oil with the desired viscosity, and the electronic control unit being configured to control the controllable blender accordingly.

In an eleventh possible implementation form of the fourth aspect the cylinder oil has a controlled TBN and a controlled viscosity.

In a twelfth possible implementation form of the fourth aspect the viscosity agent is a fluid or oil with a high viscosity or is a viscosity increasing additive or wherein the viscosity agent is a fluid or oil with a low viscosity and is a viscosity decreasing additive.

In a thirteenth possible implementation form of the fourth aspect the blender is an integral blender that is configured for blending the first oil, the high TBN oil or the high TBN agent and the viscosity agent, preferably in a batch wise blending process.

In a fourteenth possible implementation form of the fourth aspect the blender comprises a TBN blender for blending base oil with the TBN increasing product and a viscosity blender for blending the blend prepared with the TBN blender with a viscosity agent.

In a fifteenth possible implementation form of the second aspect, the base oil is a used oil, preferably system oil withdrawn from the crankcase lubrication system.

Further implementation forms are apparent from the dependent claims, the description and the figures. These and other aspects of the invention will be apparent from the embodiments described below.

BRIEF DESCRIPTION OF THE DRAWINGS

In the following detailed portion of the present disclosure, the invention will be explained in more detail with reference to the example embodiments shown in the drawings, in which:

Fig. 1 is a diagrammatic sectional view of a lubrication system for a two-stroke crosshead engine according to an example embodiment,

Fig. 2 is a diagrammatic sectional view of a lubrication system for a large two-stroke crosshead engine according to another example embodiment,

Fig. 3 is a diagram showing the relation between temperature and viscosity of two types of oil,

Fig. 4 is an enlarged detail of the diagram of Fig.3,

Fig. 5 is a diagram illustrating an example relation between a determined TBN value and engine load

Fig. 6 is a diagram illustrating another example relation between a determined TBN value and engine load,

Fig. 7 is a diagram illustrating yet another example relation between a determined TBN value and engine load,

Fig. 8 is a diagram illustrating an example of relation between flow rate of the cylinder oil, flow rate of an acid neutralizing substance in the cylinder oil and the resulting TBN of the cylinder oil, and

Fig. 9 is a diagram illustrating another example a relation between flow rate of the cylinder oil, flow rate of an acid neutralizing substance in the cylinder oil and the resulting TBN of the cylinder oil.

DETAILED DESCRIPTION

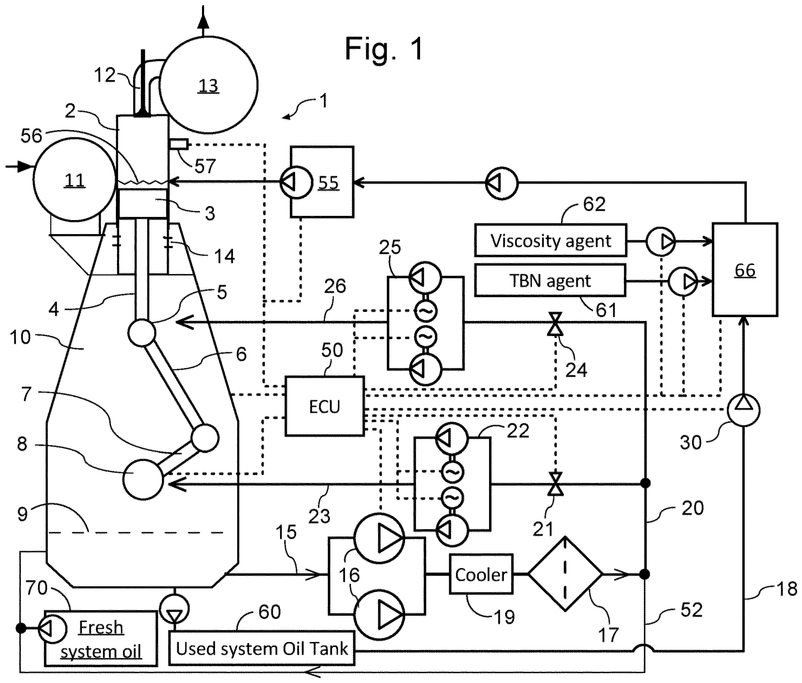

In the following detailed description, a lubrication system for a two-stroke engine crosshead engine will be described by the example embodiments. Fig. 1 diagrammatically shows a large low speed turbocharged two-stroke diesel engine 1 with a crankshaft 7 and crossheads 5 sectional view. Two-stroke crosshead engines typically have between four and sixteen cylinders in line, carried by an engine frame 10. The engine 1 may e.g. be used as the main engine in an ocean going vessel, or as prime mover in a stationary power plant. At the maximum continuous rating of the engine the total output of the engine may, for example, range from 5,000 to 110,000 kW.

The engine is a diesel (pressure ignited internal combustion) engine of the two-stroke uniflow type with scavenge ports 14 at the lower region of the cylinders 1 and an exhaust valve 12 at the top of the cylinders 1. The engine can be operated on various types of fuel, such as e.g. marine diesel, heavy fuel, or gas. The scavenge air is passed from the scavenge air receiver 11 to the scavenge ports 14 of the individual cylinders 2. A piston 3 in the cylinder liner 2 compresses the scavenge air, fuel is injected and combustion follows and exhaust gas is generated. When an exhaust valve 12 is opened, the exhaust gas flows through an exhaust duct associated with the cylinder concerned into the exhaust gas receiver 13 and onwards through a first exhaust conduit to a turbocharger (not shown), from which the exhaust gas flows away from the atmosphere. The turbocharger delivers pressurized scavenge air to a scavenge air conduit leading to the scavenge air receiver 11.

A piston rod 4 extends from the bottom of the piston to the crosshead 5. A connecting rod 6 connects the crosshead 5 to one of the throws of the crankshaft 7. The crankshaft 7 is rotation suspended in the engine frame and bedplate by the main bearings 8. A thrust bearing (not shown) is provided at the aft of the engine to accommodate the thrust created by a propeller (not shown) driven by the engine 1. The thrust bearing is supplied with lubrication oil by the same conduit that supplies the main bearings 8. In the main bearings 8 an oil film between the bearing surface and the journal surface carries the journal and prevents substantially any direct contact between the journal surface and the inside surface of the shells and provides lubrication. A flow of lubrication oil is supplied to the bearing surface. The lubrication oil film assists in cooling the main bearing.

Two-stroke crosshead engines include an array of components that are for lubrication and/or cooling purposes supplied with lubrication oil. All these components are provided with lubrication oil via the crankcase lubrication system except for the cylinders and piston rings which receive another type of oil from the cylinder oil system.

The crankcase lubrication system is essentially a closed loop lubrication system in which the system oil is recirculated. The crankcase lubrication system provides lubrication for cooling a range of components of the engine. For example, the crankshaft 7 is placed in an oil sump 9 that is provided in the lower part of the engine 1 and supplied with lubrication oil under pressure that is circulated through the oil sump 9. Other lubrication positions, such as bearings, etc. are separately provided with lubrication oil, as will be described in greater detail further below. The surplus leakage oil is collected in the oil pan 9. A lubrication oil supply loop is provided for supplying lubrication oil to all lubrication oil consumers. The lubrication oil supply loop includes a supply conduit 15 that starts at the oil sump 9. The supply conduit 15 includes two low-pressure pumps 16 arranged in parallel with respective electric drive motors for arranging the oil transport (although it is understood that there could be any other number of supply pumps). The supply conduit 15 also includes a cooler 19 for cooling the lubrication oil and a filter 17 for filtering out contamination. This can in one embodiment be a BσK 50μ filter.

The supply conduit 15 splits downstream of the filter 17 into an oil sump supply conduit 52 and a bearing supply conduit 20. The oil sump supply conduit 52 delivers filtered and cooled lubrication oil to the oil sump 9.

The bearing supply conduit 20 branches into a main bearing supply conduit 23 and a crosshead bearing supply conduit 26. The main bearing supply conduit 23 also provides the thrust bearing the aft of the engine 1 with lubrication oil.

The main bearing supply conduit 23 includes an electronically controlled valve 21 for controlling the flow. The main bearing supply conduit 23 also includes a feed pump 22. In the present embodiment a pair of parallel feed pumps is shown, but it is understood that any number of pumps could be used, although a plurality of pumps is preferred for redundancy reasons. The feed pump 22 is driven by one or more electric drive motors. The main bearing supply conduit 23 delivers a substantially constant flow of lubrication oil to the main bearings 8 during engine operation.

The crosshead bearing supply conduit 26 includes an electronically controlled valve 24 for controlling the flow. The crosshead bearing supply conduit 26 also includes a feed pump 25. In the present embodiment a pair of parallel feed pumps are shown, but it is understood that any number of pumps could be used, although a plurality of pumps is preferred for redundancy reasons. The feed pump 25 is driven by one or more electric drive motors. The crosshead bearing supply conduit 26 delivers a substantially constant flow of lubrication oil to the crosshead bearings during engine operation.

A portion of the (used) system oil is withdrawn from the crankcase lubrication system. Hereto, a feed pump transports an amount of system oil from the oil pan 9 to a used system oil tank 60. A cylinder oil system supply conduit 18 connects to the used system oil tank 60. The cylinder oil system supply conduit 18 includes a feed pump 30 for providing the cylinder oil system with used system oil that has been withdrawn from the crankcase lubrication system.

In order to maintain a substantially constant amount of system oil in the crankcase lubrication system, an approximately equal amount of fresh system oil as withdrawn therefrom is added to the crankcase lubrication system from a fresh oil system tank 17 using a feed pump that connects to the oil sump supply conduit 52. Thus, the system oil is continually replenished with fresh system oil, thereby rendering it practically unnecessary to completely replace the system oil in the crankcase lubrication system with fresh system oil.

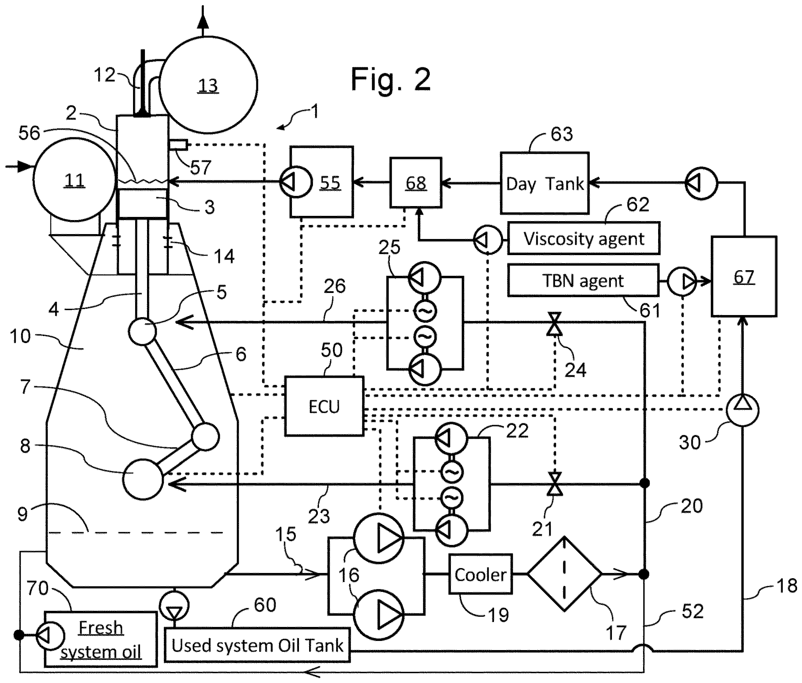

The cylinder oil system includes a blender 66 that receives used system oil from the used system oil tank 60. In an embodiment (not shown) the blender receives a base oil instead or together with the system oil. The base oil can be any suitable oil such as recycled oils or auxiliary engine oil. In an embodiment of Fig. 1 the withdrawn system oil is supplied to the blender 66 continuously at a steady rate for in-line preparation of the oil to be delivered to the cylinders 2. In another embodiment the system oil is supplied to the blender intermittently for batch wise preparation of oil to be delivered to the cylinders 2; this embodiment is explained here below in more detail with respect to Fig. 2.

In the blender 66 the withdrawn system oil (base oil) is mixed or blended with a TBN increasing product and with a viscosity agent to prepare the cylinder oil that is to be supplied to the cylinders. The details of the blending process are described in detail further below. From the blender 66 the prepared oil, "cylinder oil" is transported by a feed pump to a cylinder oil dosage pump 55. The cylinder oil dosage pump 55 ensures precise and correctly timed dosage of the cylinder oil to the individual cylinders 2. The dosage of the cylinder oil can be in the form of intermittent injections of a precise quantity of cylinder oil per number of engine revolutions. This number can be anywhere between 0,5 five and fourteen, so that a cylinder oil injection takes place in the range between twice four one engine evolution to having thirteen dry engine revolutions between injection events. In an embodiment the electronic control unit 50 is operatively connected to the cylinder oil dosage pump 55 and configured to control the feed rate of cylinder oil delivered by dosage pump 55 to be substantially proportional to the engine load. The cylinder is delivered to the liner surface of the cylinder liner 2 by a plurality of cylinder lubrication holes (also called injection points) through the wall of the cylinder liner. The cylinder lubrication holes are (preferably evenly) distributed around the circumference of the cylinder liner 2 at substantially equal height. The injection points are connected to one another by a lubrication line 56 that typically has a zigzag shape. In an embodiment, the supply of the cylinder oil through lubrication holes and the lubrication line is precisely timed to occur when the piston 3 passes the lubrication line. Thereafter the piston rings distribute the oil over the running surface of the cylinder liner 2. In another embodiment the supply of cylinder oil through the lubrication holes is in the form of a spray onto the cylinder wall and takes place before the piston passes the injection points in its compression stroke.

The blender 66 receives a TBN increasing product from a source of TBN increasing product 61 via a supply conduit that includes a supply pump. The source of TBN increasing product can be a tank with a dedicated TBN agent with a TBN for example up to 400, or a tank with an oil with a high TBN such as a fresh commercially available "cylinder oil" with a high TBN such as e.g. a TBN equal to or above 80 or equal or above 100. In an embodiment the TBN agent comprises a base oil and basicity increasing additives.

The blender 66 also receives a viscosity agent from a source of viscosity agent 62 via a supply conduit that includes a supply pump. The source of viscosity agent can be a tank with a dedicated viscosity agent or a tank with an oil with a high viscosity, such as an oil with a viscosity equal or above SAE 50 or equal to above SAE 60. The oil used as viscosity agent is preferably single grade SAE. Alternatively, the viscosity agent may have a low viscosity in order to reduce the viscosity of the blended oil, for example equal to or below SAE 30.

The system oil for the crankcase lubrication system is typically a high quality paraffinic base oil containing a number of performance additives. The alkalinity of the system oil (defined by its TBN number) must be sufficient to neutralize any strong acids formed from combustion of the fuel which may find their way into the crankcase.

The characteristics of an example of system oil for use in the crankcase lubrication system of a two-stroke crosshead engine are as follows:

| SAE No | 30 |
|---|---|
| Specific Gravity (15/15C) | 0.894 |
| Flash Point min C | 229 |
| Pour Point max C | -15 |
| Viscosity: cSt at 40C | 108 |
| at 100C | 11.8 |
| Viscosity Index | 97 |
| Total Base Number | 5.3 |
| Sulphated Ash, % wt. | 0.73 |

The total base number is an indication of the alkalinity of an oil in the milligrams of acid, expressed in equivalent milligrams of potassium hydroxide (KOH), required to neutralize all basic constituents.

The cylinder oil delivered to the cylinders by the cylinder oil system must be thermally stable. The oil needs to be able to retain an oil film at the high surface temperatures of e.g. the piston rings and the cylinder liner 2. The oil delivered to the cylinders must have anti wear characteristics and detergents to minimize deposits on the pistons 3 and in the ring grooves.

The cylinder oil delivered to the cylinders typically has a high TBN between 30 and 100 to neutralize the acids formed by the combustion of the sulphur in the fuel. The required TBN value was in the prior art dependent only on the sulphur content in the fuel (which may vary) and was set at a value anywhere between e.g. 30 and 100. Alkaline additives can make up about a significant portion of the oil.

The viscosity of the oil delivered to the cylinders is relatively high (e.g. 21 cSt at 100°C for an SAE 50 oil) in order to lubricate effectively at the higher temperatures (e.g. 190°C) of the cylinder liner 2 resulting in a viscosity of approximately 3,2 cSt where the oil is applied.

The oil delivered to the cylinders is a "use once consumable". The oil is injected into the cylinder at a feed rate to give optimum protection against acid corrosion and microseizures (scuffing).

The characteristics of an example of cylinder oil for supplying to the cylinders of a two-stroke crosshead engine are as follows:

| SAE No | 50 |
|---|---|
| Specific Gravity (15°C) | 0.942 |
| Flash Point °C | 241 |
| Pour Point °C | -9 |
| Viscosity: cSt at 40°C | 247 |
| cSt at 100°C | 21 |
| Viscosity Index | 100 |
| Total Base Number (mg. KOH/g) | 70 |

The list of viscosity agents includes but is not limited to:
Used and fresh finished lubricants such as hydraulic oils, turbine oils, monograde and multigrade engine oils, gear oils, base oils including naphthenic and paraffinic mineral oils (of Group I, II and III), synthetic polyalphaolefins (PAO), polymeric entities such as polymethylmethacrylate (PMMA) and olefin copolymers (OCP) and mixtures thereof.

The source of viscosity agent may comprise a source of high viscosity agents for increasing the resulting viscosity and a source of low viscosity agents for decreasing the resulting viscosity.

Adjusting the TBN preferably comprises adjusting at least one additive level or adding one or more additives, where the additives comprise at least one base comprising basic salts of alkaline or earth alkaline elements, and/or detergents and/or dispersants. Alternatively, adjusting the TBN comprises blending with a high TBN oil, such as a commercial cylinder oil with a high TBN value, e.g. with a TBN above 100.

The alkaline/earth alkaline elements may be e.g. K, Na, Ca, Ba, Mg or the like. The basic salts may belong to the Inorganic chemical families of e.g. oxides, hydroxides, carbonates, sulphates or the like. The detergents may belong to the organic chemical families of e.g. sulfonates, salicylates, phenates, sulphophenates, Mannich-bases and the like. The dispersants may belong to the organic chemical families of succinimides or the like.

An electronic control unit 50 receives signals that contain information about the engine, such as specific temperatures and pressures, and operating conditions, such as the engine load and speed. The electronic control unit 50 is also connected, e.g. via signal cables to the feed pumps 22 for the main bearings, the control valve 21 in the main bearing supply conduit 23, the feed pumps 25 for the crosshead banks, control valve 24 in the crosshead bearing supply conduit 26 and to the control valve 24 in the crosshead bearing supply conduit 26.

The electronic control unit 50 is also connected, e.g. via signal cables to the feed pumps that deliver the viscosity agent and the TBN agent to the mixer 66, both to the mixer 66 itself and to the cylinder oil dosage pump 55. Alternatively, the mixer 66 may be provided with its own electronic control unit (not shown), that carries out the functions that are described below that relates to the mixer 66. The electronic control unit 50 is also connected via e.g. signal lines to a sensor that detects crankshaft revolutions of the engine. In an embodiment the control unit 50 is connected to a temperature sensor 57 and thus in receipt of a signal representing the temperature of the upper portion of the cylinder liner 2.

The electronic control unit 50 is configured to determine the amount (flow rate) of lubrication oil that needs to be delivered to the main bearings 8. The electronic control unit 50 is also configured to determine the amount (flow rate) of lubrication oil that needs to be delivered to the crosshead bearings.

The electronic control unit 50 is also configured to or determine the required TBN for the oil that is delivered to the cylinders 2. Hereto, the electronic control unit 50 is in receipt of information on the fuel quality, i.e. sulphur content and of the cylinder liner temperature or an estimate thereof, e.g. an estimate of the cylinder liner temperature based on the engine load, and determines the required TBN e.g. from lookup tables stored in the electronic control unit 50 or by using an algorithm or equation stored in the electronic control unit 50, taking into account both the sulfur content of the fuel and the cylinder liner temperature or estimate thereof.

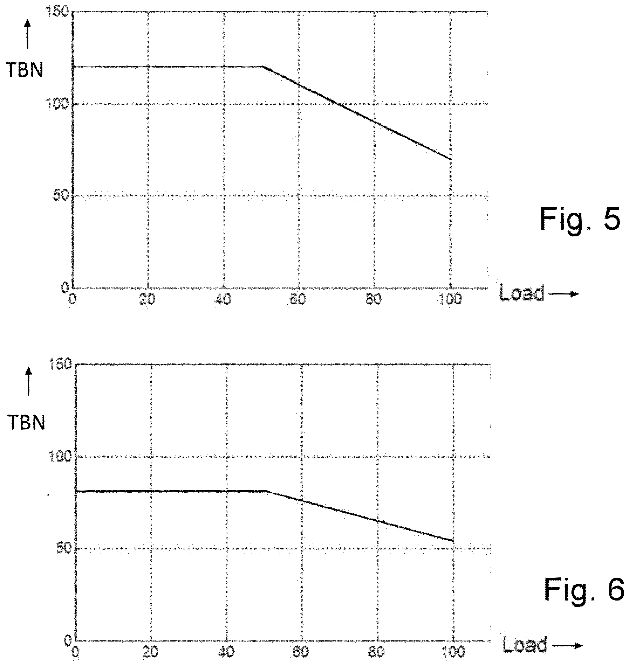

Fig. 5 is a diagram that shows an example of the relation between the TBN and the engine load as controlled by the electronic control unit 50 (in this example the engine load has been used to estimate the actual cylinder liner temperature). This example is for a fuel with a high sulfur content, i.e. approximately 3%. For engine loads below 50% of the maximum continuous rating of the engine the temperature of the cylinder liner 2 is relatively low and therefore a relatively large amount of the water vapor in the combustion gas will condensate on the relatively cool cylinder liner 2 thereby causing a relatively high amount of acidic material originating from the sulfur in the fuel to be deposited on the cylinder liners 2. Therefore, a relatively high TBN of 120 is applied by the electronic control unit 50 for engine loads under 50% of the maximum continuous rating of the engine 1. With increasing engine load the cylinder liner temperature increases and the relative amount of water vapor that condensates on the relatively warm cylinder liners decreases. The electronic control unit 50 controls the TBN of the oil delivered to the cylinders accordingly and reduces the TBN value with increasing engine loads. In this example the relation between the desired TBN value and the engine load is proportional for engine loads above 50% of the maximum continuous rating of the engine 1. Thus, the TBN of the oil supplied to the cylinders is in this example approximately 120 at 50% engine load and approximately 70 at 100% engine load, with the TBN decreasing linearly proportional with the engine load for engine loads above 50% of the maximum continuous rating of the engine 1.

Fig. 6 is a diagram that shows an example of the relation between the TBN and the engine load as controlled by the electronic control unit 50 (in this example the engine load has been used to estimate the actual cylinder liner temperature). This example is for a fuel with a high sulfur content, i.e. approximately 1 %. The TBN regime is essentially the same as for the example of Fig. 5, except that the electronic control unit 50 controls the TBN to be 80 when the engine load is below 50% of the engine's maximum continuous rating and controls the TBN to go from 80 linearly to 55 with increasing engine load. The lower TBN levels when compared to the example in Fig. 5 are due to the lower sulfur content in the fuel.

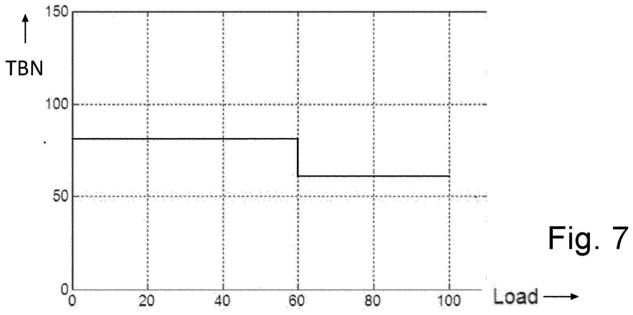

Fig. 7 is a diagram that shows an example of the relation between the TBN and the engine load as controlled by the electronic control unit 50 (in this example the engine load has been used to estimate the actual cylinder liner temperature). This example is for a fuel with a high sulfur content, i.e. approximately 1 %. The TBN regime is essentially the same as for the example of Fig. 6, except that the electronic control unit 50 controls the TBN to be 80 when the engine load is below 60% of the engine's maximum continuous rating and controls the TBN to be 60 when the engine load is above 60% of the engine's maximum continuous rating. In this example the TBN does not follow the actual need for alkaline material to be present on the cylinder liner as in the two previous embodiments but this example allow a more simple control and still improved results when compared to the constant TBN level used in the prior art.

The OEM (original engine manufacturer/developer) normally issues a service guideline that specifies the TBN to be used for a particular sulfur content of the fuel and specifies the amount of oil that is supplied to the cylinders, normally as a function of the engine load. In an example embodiment, the TBN can be chosen to match the TBN specified by the OEM for engine loads below 50 to 60% of the engine's maximum continuous rating, whilst a lower TBN is applied when the engine load is above 50 to 60% of the engine's maximum continuous rating. However, the optimal TBN level can also be determined empirically for the various engine loads and the electronic control unit 50 is in an example embodiment programmed to apply the hence determined TBN level.

The electronic control unit 50 is in receipt of a signal representative of the engine load. The engine load is a parameter that is indicative of the cylinder liner temperature. Alternatively, the electronic control unit is in receipt of a signal from the temperature sensor (not shown) that measures the jacket cooling water temperature. The jacket cooling water temperature is also indicative of the temperature of the cylinder liner and can be used as an alternative parameter by the electronic control unit 50. Alternatively, the electronic control unit is in receipt of a signal from a temperature sensor 57 in the cylinder liner. Based on the temperature of the cylinder liners, or on a parameter representative thereof the electronic control unit 50 is configured to determine the optimal viscosity for the oil that is delivered to the cylinders.

Alternatively, the electronic control unit 50 determines directly from the parameter that is indicative of the cylinder liner temperature the required proportions of withdrawn system oil, TBN agent and viscosity agent.

The electronic control unit 50 is configured to determine the required viscosity for the oil that is delivered to the cylinders 2. Hereto, the electronic control unit 50 is provided with an algorithm that determines the required proportions of withdrawn system oil, viscosity agent and TBN agent that results in a prepared oil in the blender 66 that has the determined optimal TBN value and the determined optimal viscosity. The electronic control unit 50 is configured to control the blender 66 and optionally the feed pumps that deliver the withdrawn system oil, the viscosity agent and the TBN agent respectively to deliver the appropriate amounts of respective fluid to the blender 66 and to blend or mix the appropriate amount of the respective fluids in the blender 66, preferably in a continuous process.

The electronic control unit 50 is configured to recalculate the required proportions of system oil, viscosity agent and TBN agent when the temperature of the cylinder liner changes and/or when the sulfur content of the fuel changes and to control the blender 66 and the feed pumps of the withdrawn system oil, of the TBN agent and of the viscosity agent accordingly.

Fig. 2 illustrates another embodiment that is essentially identical to the embodiment that is described with reference to Fig. 1, except that there are two blenders: a TBN blender 67 and a viscosity blender 68. In Fig. 2 the viscosity blender 68 is downstream of the TBN blender 67 with a tank 63 in between. This allows batch wise production of an oil blend with an adjusted TBN value and storing this oil blend with the adjusted TBN value in the day tank 63 and allows online adaptation of the batch wise produced oil blend to the required viscosity value in the online viscosity blender 68.

Changes to the sulphur content of the fuel are not frequent and can normally be foreseen well in advance. Thus, it is normally not necessary to adjust the TBN value of the oil to be delivered to the cylinders quickly or unexpectedly and therefore a batch wise production is unproblematic. However, changes to the engine load could be caused by e.g. an unexpected change in the weather or other conditions that are beyond control of the operator of the marine vessel. Therefore, it is advantageous that the adjustment of the viscosity is performed in an online blending process and allows for a quick and instantaneous adjustment of the viscosity to actual operating conditions.

In an embodiment, the electronic control unit 50 is configured to determine the required flow rate of the cylinder oil to the cylinders in order to supply the cylinders with the amount of lubrication that is needed under the actual engine operating conditions, the flow rate of the cylinder oil being determined without taking consideration to the requirement to feed the cylinders with a flow of acid neutralizing substance.

In this embodiment the electronic control unit 50 is also configured to determine the required flow rate of acid neutralizing substance in order to supply the cylinders with the amount of acid neutralizing substance that is needed under the actual engine operating conditions, the required flow rate of acid neutralizing substance being determined without taking consideration to the required flow rate of cylinder oil to lubricate the cylinders.

The inventors have realized that the need for the cylinders to receive lubrication oil at a certain rate is completely independent from the need of the cylinders to receive acid neutralizing substance.

The need of the cylinders for lubrication oil at a certain rate serves ensure that there is sufficient lubrication for the piston and the piston rings to slide on the inner surface of the cylinder liner with low friction and wear when compared to an un-lubricated cylinder liner.

Similarly, the need of the cylinders for receiving an acid neutralizing substance at a certain rate is in order to protective cylinder liner from the acidic combustion products that are generated in the cylinder.

These two needs are both covered by providing a cylinder oil with a suitable TBN. Conventional cylinder oil lubrication regimes are based on a given TBN for a given sulfur content of the fuel and a feed rate that is typically proportional to the engine load, e.g. a feed rate of a certain number of grams of cylinder oil per kWh.

The introduction of on board blenders that blend a base oil with a TBN increasing product have allowed the TBN to be adjusted to needs. However, the TBN adjustment has in the art only been made to accommodate for changes in sulfur content the fuel and has not been adjusted to the actual need of the engine to receive given flow rate of acid neutralizing substance.

Thus, the electronic control unit 50 is configured to determine the actual, i.e. the present, rate of lubrication that is needed to be supplied to the cylinders in order to provide an adequate amount of lubrication for the pistons and piston rings to slide on the inner surface of the cylinder liner with the required low friction and mechanical wear.

In an embodiment the electronic control unit 50 is configured to deliver a fixed quantity of cylinder oil per engine revolution. For many large two-stroke diesel engines the lubrication need of the cylinders 2 and pistons 3 will be met if a fixed quantity of cylinder oil is injected into the cylinder liner 2 for each engine revolution.

In embodiment the electronic control unit 50 is configured to deliver a flow rate of acid neutralizing substance that is proportional to the engine load. The electronic control unit 50 is at the same time configured deliver a flow rate of neutralizing substance that is proportional to the flow of sulphur into the cylinders 2 with the fuel. The electronic control unit 50 is configured to ensure that the flow rate of acid neutralizing material is proportional with the flow rate of fuel into the cylinders 2, though taking into account different compensation rates of the city combustion projects at different cylinder liner temperatures. Thus, with cylinder liner temperatures being equal the electronic control unit 50 is configured to render the flow rate of acid neutralizing material provided to the cylinders 2 via the cylinder oil proportional to the flow of fuel into the cylinders, i.e. proportional to the engine load.

In an embodiment the electronic control unit 50 is configured to reduce the flow of acid neutralizing material to the cylinders 2 relative to the flow of fuel to the cylinders for higher cylinder liner temperatures when compared to lower cylinder liner temperatures, in order to compensate for reduced condensation of acidic products at higher cylinder liner temperatures. Electronic control unit 50 is either directly informed of the cylinder liner temperature via temperature sensor 57 or the electronic control unit 50 is configured to determine the cylinder liner temperature on the basis of the engine load, e.g. from a lookup table or a using formula. Such a lookup table or form will be specific for a particular type of large two-stroke diesel engine 1.

Equally, the electronic control unit 50 will be configured to take into account specific engine characteristics.

The electronic control unit 50 controls the blender 67, which includes controlling the flow of TBN agent from the TBN agent tank 61 to the blender 67. In an embodiment the electronic control unit is configured to make the flow of TBN agent into the blender 67 proportional to the flow of fuel into the cylinders 2 of the engine 1, so that the flow of acid neutralizing substance into the cylinders with the cylinder oil is essentially proportional to the flow of sulfur into the cylinders 2 with the fuel. The electronic control unit 50 is also configured to take in educe flow of the TBN agent in order to take account effects of lesser condensation at high liner temperatures, i.e. to reduce the flow of TBN agent to the blender 67 relative to the proportional relation between the flow of sulfur into the cylinders 2 and the flow of TBN agent into the cylinder. The electronic control unit 50 is configured to control the flow of cylinder oil as weight per time unit or volume per time unit in accordance with the exact lubrication needs of the cylinders 2. This control can be carried out by the electronic control unit 50 via the cylinder oil dosage pump 55.

The electronic control unit 50 can also be configured to determine a desired basicity (TBN) of the cylinder oil that is supplied to the cylinders 2 on the basis of the actual cylinder oil flow rate and on the basis of the actually needed capacity to neutralize acidic combustion products in the cylinders 2.

The electronic control unit 50 is thus configured to feeding the cylinder oil to the cylinders 2 at a variable and controllable cylinder oil feed rate and with a variable and controllable basicity (TBN). This combination of feed rate and basicity results in a capacity to neutralize acidic combustion products in the cylinders 2. Electronic control unit 50 is configured to adjust the variable cylinder oil feed rate to an actual lubrication need of the inner surface of the cylinder liner 2, and configured to adjust capacity to neutralize acidic combustion products in the cylinder 2 by adjusting the basicity of said cylinder oil to the actual need of the inner surface of the cylinder liner for protection against acidic combustion products in said cylinder liner 2.

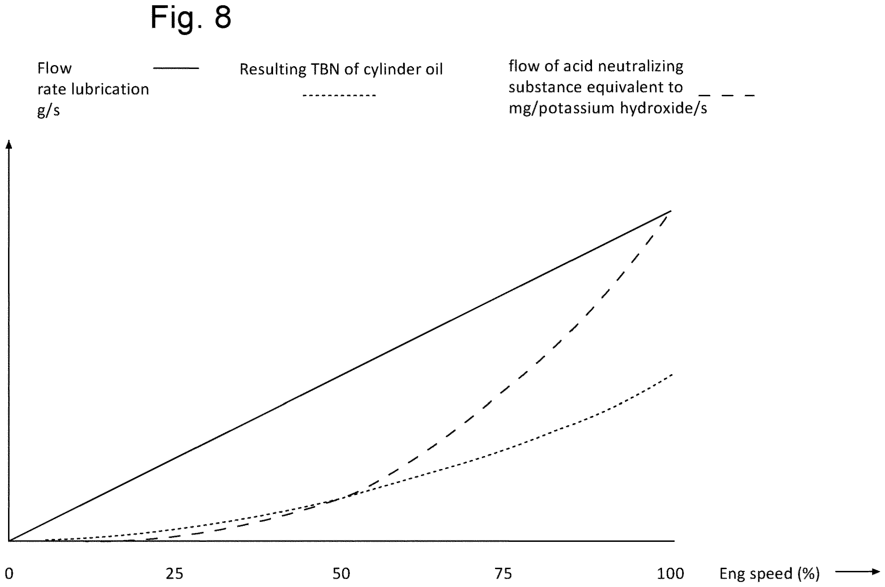

Fig. 8 is a graph illustrating example of the required flow of cylinder oil as weight per time unit, the flow of acid neutralizing substance as equivalent of potassium hydroxide for time unit, as well as the resulting TBN of the cylinder oil delivered to the cylinders 2. The flow rate of cylinder oil is shown as an uninterrupted line. The flow of acid neutralizing substance is shown as the interrupted line with the long interruptions and the resulting TBN of the cylinder oil is shown as the interrupted line with the short interruptions.

The graph in Fig. 8 assumes that the large two-stroke diesel engine is connected to a fixed pitch propeller so that the engine load/power increases to power of three with the engine speed. The graph shows an example in which the flow rate of the cylinder oil into the cylinders 2 is a fixed amount per engine revolution, i.e. the flow rate is proportional with the engine speed. The amount of acid neutralizing substance is proportional to the engine load/power (and proportional to the flow rate of sulfur entering the cylinders via the fuel) and increases to the power of three with engine speed. The resulting TBN of the cylinder oil increases the power of two with the engine speed.

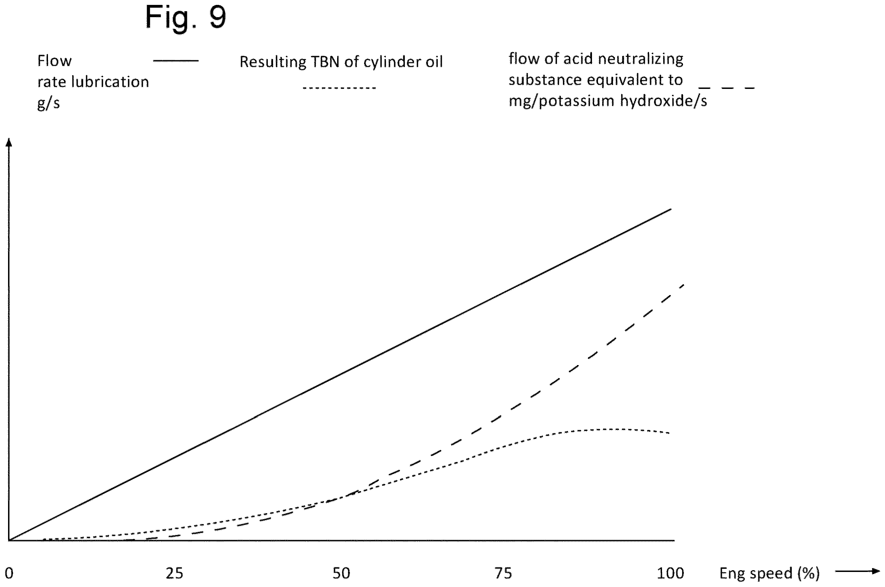

Fig. 9 is a graph that is essentially identical to the graph of Fig. 8, except that in the example in Fig. 9 the effect of lesser condensation of acidic products on the inner surface of the cylinders 2 at higher engine loads (and thus higher cylinder liner temperatures) is taken into account. Therefore, the amount of acid neutralizing substance increases less rapidly with the engine speed and the resulting TBN actually decreases with engine speed for engine speeds above 80% maximum engine speed.

**Claims**

1. A method for controlling supply of cylinder oil containing a base to a cylinder of a running large two-stroke crosshead engine, the large two-stroke crosshead engine having cylinders comprising a cylinder liner with a reciprocating piston therein, the method comprising:

   feeding the cylinder oil to the cylinder at a variable and controllable cylinder oil feed rate and with a variable and controllable basicity (TBN), adjusting the variable cylinder oil feed rate to an actual lubrication need of an inner surface of the cylinder liner,
   adjusting a total amount of detergent in the cylinder oil to an actual need for a presence of detergent in the cylinder liner, and
   adjusting a capacity to neutralize acidic combustion products in the cylinder resulting from an actual cylinder oil feed rate and basicity (TBN) by adjusting the basicity of the cylinder oil to an actual need of the inner surface of the cylinder liner for protection against acidic combustion products in the cylinder liner.

2. The method according to claim 1, further comprising determining the actual lubrication need of the inner surface of the cylinder liner, the determination of the actual lubrication need preferably being based on a tribological requirement of the reciprocating piston and the inner surface of the cylinder liner and even more preferably taking into account the role of the cylinder oil in reducing mechanical wear of the inner surface of the cylinder liner and reducing friction between the cylinder liner and the reciprocating piston.

3. The method according to claim 1 or 2, further comprising determining the actual need of the inner surface of the cylinder liner for protection against acidic combustion products in the cylinder liner, said determination of the actual need of the inner surface of the cylinder liner for protection against acidic combustion products in the cylinder liner preferably being based on the sulfur content of the fuel combusted in the cylinder and an actual load of the engine.

4. The method according to claim 1, further comprising preparing the cylinder oil by blending a base oil with a first basicity with a product having a second basicity, the second basicity being higher than the first basicity.

5. The method according to claim 4, wherein the basicity of the cylinder oil is adjusted by adjusting a blending ratio between the base oil and the product.

6. The method according to claim 4 or 5, wherein the product is a basicity increasing additive, or a basicity increasing additive package comprising an oil and basicity increasing additive.

7. The method according to any one of claims 4 to 6, wherein the adjusting the total amount of detergent in the cylinder oil comprises blending one or more lubricant detergents with the base oil.

8. The method according to claim 7, wherein the one or more lubricant detergents comprises neutral and/or basic detergent.

9. The method of claim 6 or claim 8, wherein the one or more lubricant detergents comprises one or more sulfonates, salicylates, phenates, sulphophenates, or Mannich-bases.

10. An apparatus for supplying a cylinder oil containing a base to a cylinder of a running large two-stroke crosshead engine, the large two-stroke crosshead engine having cylinders comprising a cylinder liner with a reciprocating piston therein, the apparatus comprising:

    a system configured for feeding the cylinder oil to the cylinder at a variable and controllable cylinder oil feed rate and with a variable and controllable basicity (TBN);
    a capacity to neutralize acidic combustion products in the cylinder resulting from an actual cylinder oil feed rate and basicity (TBN); and
    an electronic control unit configured to:

        adjust the variable cylinder oil feed rate to an actual lubrication need of an inner surface of the cylinder liner,
        adjust a total amount of detergent in the cylinder oil to an actual need for a presence of detergent in the cylinder liner, and
        adjust a capacity to neutralize acidic combustion products in the cylinder by adjusting the basicity of the cylinder oil to an actual need of the inner surface of the cylinder liner for protection against acidic combustion products in the cylinder liner.

11. The apparatus according to claim 10, further comprising a blender configured for blending a base oil with a first basicity with a product having a second basicity, the second basicity being higher than the first basicity.

12. The apparatus according to claim 11, wherein the electronic control unit is configured to adjust the basicity of the cylinder oil by adjusting a blending ratio between the base oil and the product.

13. The apparatus according to claim 11 or claim 12, wherein the blender is configured to blend the base oil with one or more lubricant detergents.

14. The apparatus according to any one of claims 10 to 13, further comprising a sensor arrangement for detecting revolutions of a crankshaft and/or comprising a sensor arrangement for detecting rotational speed of the crankshaft.

15. The apparatus according to any one of claims 10 to 14, wherein the apparatus further comprises a cylinder oil dosage pump (55) for feeding the cylinder oil to the cylinder of the engine (1), and wherein the electronic control unit is configured to control the feed rate of the cylinder dosage pump (55) in response to an engine load, preferably proportionally to the engine load.

**Patentansprüche**

1. Verfahren zum Steuern der Zufuhr von Zylinderöl, das eine Base enthält, zu einem Zylinder eines laufenden großen Zweitakt-Kreuzkopfmotors, wobei der große Zweitakt-Kreuzkopfmotor Zylinder aufweist, die eine Zylinderlaufbuchse mit einem darin befindlichen Hubkolben umfassen, wobei das Verfahren Folgendes umfasst:

    Einspeisen des Zylinderöls in den Zylinder mit einer variablen und steuerbaren Zylinderöleinspeisrate und mit einer variablen und steuerbaren Basizität (TBN),
    Anpassen der variablen Zylinderöleinspeisrate an einen tatsächlichen Schmierbedarf einer Innenfläche der Zylinderlaufbuchse,
    Anpassen einer Gesamtmenge an Reinigungsmittel in dem Zylinderöl an einen tatsächlichen Bedarf an vorhandenem Reinigungsmittel in der Zylinderlaufbuchse und
    Anpassen einer Fähigkeit zur Neutralisation saurer Verbrennungsprodukte in dem Zylinder, das sich aus einer tatsächlichen Zylinderöleinspeisrate und einer Basizität (TBN) ergibt, durch Anpassen der Basizität des Zylinderöls an einen tatsächlichen Bedarf der Innenfläche der Zylinderlaufbuchse zum Schutz vor sauren Verbrennungsprodukten in der Zylinderlaufbuchse.

2. Verfahren nach Anspruch 1, ferner umfassend das Bestimmen des tatsächlichen Schmierbedarfs der Innenfläche der Zylinderlaufbuchse, wobei das Bestimmen des tatsächlichen Schmierbedarfs bevorzugt auf einer tribologischen Anforderung des Hubkolbens und der Innenfläche der Zylinderlaufbuchse basiert und noch bevorzugter die Rolle des Zylinderöls bei der Verringerung des mechanischen Verschleißes der Innenfläche der Zylinderlaufbuchse und der Verringerung der Reibung zwischen Zylinderlaufbuchse und Hubkolben berücksichtigt wird.

3. Verfahren nach Anspruch 1 oder 2, ferner umfassend das Bestimmen des tatsächlichen Bedarfs der Innenfläche der Zylinderlaufbuchse nach Schutz vor sauren Verbrennungsprodukten in der Zylinderlaufbuchse, wobei das Bestimmen des tatsächlichen Bedarfs der Innenfläche der Zylinderlaufbuchse nach Schutz vor sauren Verbrennungsprodukten in der Zylinderlaufbuchse bevorzugt auf dem Schwefelgehalt des in dem Zylinder verbrannten Kraftstoffs und einer tatsächlichen Last des Motors basiert.

4. Verfahren nach Anspruch 1, ferner umfassend das Aufbereiten des Zylinderöls durch Mischen eines Grundöls mit einer ersten Basizität mit einem Produkt mit einer zweiten Basizität, wobei die zweite Basizität höher ist als die erste Basizität.

5. Verfahren nach Anspruch 4, wobei die Basizität des Zylinderöls durch Anpassen eines Mischungsverhältnisses zwischen dem Grundöl und dem Produkt angepasst wird.

6. Verfahren nach Anspruch 4 oder 5, wobei das Produkt ein die Basizität erhöhender Zusatzstoff oder ein die Basizität erhöhendes Zusatzstoffpaket, das ein Öl und einen die Basizität erhöhenden Zusatzstoff umfasst, ist.

7. Verfahren nach einem der Ansprüche 4 bis 6, wobei das Anpassen der Gesamtmenge an Reinigungsmittel in dem Zylinderöl das Mischen eines oder mehrerer Schmiermittelreinigungsmittel mit dem Grundöl umfasst.

8. Verfahren nach Anspruch 7, wobei das eine oder die mehreren Schmiermittelreinigungsmittel ein neutrales und/oder basisches Reinigungsmittel umfassen.

9. Verfahren nach Anspruch 6 oder Anspruch 8, wobei das eine oder die mehreren Schmiermittelreinigungsmittel ein oder mehrere Sulfonate, Salicylate, Phenate, Sulfophenate oder eine oder mehrere Mannich-Basen umfassen.

10. Vorrichtung zum Zuführen eines Zylinderöls, das eine Base enthält, zu einem Zylinder eines laufenden großen Zweitakt-Kreuzkopfmotors, wobei der große Zweitakt-Kreuzkopfmotor Zylinder aufweist, die eine Zylinderlaufbuchse mit einem darin befindlichen Hubkolben umfassen, wobei die Vorrichtung Folgendes umfasst:

ein System, das zum Einspeisen des Zylinderöls in den Zylinder mit einer variablen und steuerbaren Zylinderöleinspeisrate und mit einer variablen und steuerbaren Basizität (TBN) konfiguriert ist; eine Fähigkeit, saure Verbrennungsprodukte in dem Zylinder zu neutralisieren, die sich aus einer tatsächlichen Zylinderöleinspeisrate und einer Basizität (TBN) ergibt; und eine elektronische Steuereinheit, die konfiguriert ist zum:

Anpassen der variablen Zylinderöleinspeisrate an einen tatsächlichen Schmierbedarf einer Innenfläche der Zylinderlaufbuchse, Anpassen einer Gesamtmenge an Reinigungsmittel in dem Zylinderöl an einen tatsächlichen Bedarf an vorhandenem Reinigungsmittel in der Zylinderlaufbuchse und Anpassen einer Fähigkeit zur Neutralisation saurer Verbrennungsprodukte in dem Zylinder durch Anpassen der Basizität des Zylinderöls an einen tatsächlichen Bedarf der Innenfläche der Zylinderlaufbuchse zum Schutz vor sauren Verbrennungsprodukten in der Zylinderlaufbuchse.

11. Vorrichtung nach Anspruch 10, ferner umfassend einen Mischer, der zum Mischen eines Grundöls mit einer ersten Basizität mit einem Produkt mit einer zweiten Basizität konfiguriert ist, wobei die zweite Basizität höher als die erste Basizität ist.

12. Vorrichtung nach Anspruch 11, wobei die elektronische Steuereinheit konfiguriert ist, die Basizität des Zylinderöls durch Anpassen eines Mischungsverhältnisses zwischen dem Grundöl und dem Produkt anzupassen.

13. Vorrichtung nach Anspruch 11 oder Anspruch 12, wobei der Mischer dazu konfiguriert ist, das Grundöl mit einem oder mehreren Schmiermittelreinigungsmitteln zu mischen.

14. Vorrichtung nach einem der Ansprüche 10 bis 13, ferner umfassend eine Sensoranordnung zum Erfassen von Umdrehungen einer Kurbelwelle und/oder umfassend eine Sensoranordnung zum Erfassen einer Drehzahl der Kurbelwelle.

15. Vorrichtung nach einem der Ansprüche 10 bis 14, wobei die Vorrichtung ferner eine Zylinderöl-Dosierpumpe (55) zum Einspeisen des Zylinderöls in den Zylinder des Motors (1) umfasst und wobei die elektronische Steuereinheit konfiguriert ist, die Einspeisrate der Zylinder-Dosierpumpe (55) als Reaktion auf eine Motorlast, bevorzugt proportional zu der Motorlast, zu steuern.

## Revendications

1. Procédé de commande de l'alimentation d'un cylindre d'un gros moteur à crosse à deux temps en fonctionnement en huile de cylindre contenant une base, le gros moteur à crosse à deux temps ayant des cylindres comprenant une chemise de cylindre avec un piston alternatif à l'intérieur, le procédé comprenant :

l'alimentation du cylindre en huile de cylindre à un débit d'alimentation en huile de cylindre variable et réglable et avec une basicité (TBN) variable et réglable,
l'ajustement du débit d'alimentation en huile de cylindre variable à un besoin réel de lubrification d'une surface intérieure de la chemise de cylindre,
l'ajustement d'une quantité totale de détergent dans l'huile de cylindre à un besoin réel de présence de détergent dans la chemise de cylindre, et
l'ajustement d'une capacité de neutralisation de produits de combustion acides dans le cylindre résultant d'un débit d'alimentation et d'une basicité (TBN) réels d'huile de cylindre en ajustant la basicité de l'huile de cylindre à un besoin réel, de la surface intérieure de la chemise de cylindre, de protection contre les produits de combustion acides dans la chemise de cylindre.

2. Procédé selon la revendication 1, comprenant également la détermination du besoin réel de lubrification de la surface intérieure de la chemise de cylindre, la détermination du besoin réel de lubrification étant de préférence basée sur une exigence tribologique du piston alternatif et de la surface intérieure de la chemise de cylindre et, de manière encore davantage préférée, en tenant compte du rôle de l'huile de cylindre dans la réduction de l'usure mécanique de la surface intérieure de la chemise de cylindre et dans la réduction du frottement entre la chemise de cylindre et le piston alternatif.

3. Procédé selon la revendication 1 ou 2, comprenant également la détermination du besoin réel, de la surface intérieure de la chemise de cylindre, de protection contre les produits de combustion acides dans la chemise de cylindre, ladite détermination du besoin réel, de la surface intérieure de la chemise de cylindre, de protection contre les produits de combustion acides dans la chemise de cylindre étant de préférence basée sur la teneur en soufre du carburant brûlé dans le cylindre et d'une charge réelle du moteur.

4. Procédé selon la revendication 1, comprenant également la préparation de l'huile de cylindre par mélange d'une huile de base ayant une première basicité avec un produit ayant une seconde basicité, la seconde basicité étant supérieure à la première basicité.

5. Procédé selon la revendication 4, dans lequel la basicité de l'huile de cylindre est ajustée en ajustant un rapport de mélange entre l'huile de base et le produit.

6. Procédé selon la revendication 4 ou 5, dans lequel le produit est un additif augmentant la basicité, ou un ensemble d'additifs augmentant la basicité comprenant une huile et un additif augmentant la basicité.

7. Procédé selon l'une quelconque des revendications 4 à 6, dans lequel l'ajustement de la quantité totale de détergent dans l'huile de cylindre comprend le mélange d'un ou plusieurs détergents lubrifiants avec l'huile de base.

8. Procédé selon la revendication 7, dans lequel les un ou plusieurs détergents lubrifiants comprennent un détergent neutre et/ou basique.

9. Procédé selon la revendication 6 ou la revendication 8, dans lequel les un ou plusieurs détergents lubrifiants comprennent un ou plusieurs sulfonates, salicylates, phénates, sulfophénates ou bases de Mannich.

10. Appareil permettant d'alimenter un cylindre d'un gros moteur à crosse à deux temps en fonctionnement en huile de cylindre contenant une base, le gros moteur à crosse à deux temps ayant des cylindres comprenant une chemise de cylindre avec un piston alternatif à l'intérieur, l'appareil comprenant :

un système configuré pour alimenter le cylindre en huile de cylindre à un débit d'alimentation en huile de cylindre variable et réglable et avec une basicité (TBN) variable et réglable ;
une capacité de neutralisation de produits de combustion acides dans le cylindre résultant d'un débit d'alimentation et d'une basicité (TBN) réels d'huile de cylindre ; et
une unité de commande électronique configurée pour :

ajuster le débit d'alimentation en huile de cylindre variable à un besoin réel de lubrification d'une surface intérieure de la chemise du cylindre,
ajuster une quantité totale de détergent dans l'huile de cylindre à un besoin réel de présence de détergent dans la chemise de cylindre, et
ajuster une capacité de neutralisation de produits de combustion acides dans le cylindre en ajustant la basicité de l'huile de cylindre à un besoin réel, de la surface intérieure de la chemise de cylindre, de protection contre les produits de combustion acides dans la chemise de cylindre.

11. Appareil selon la revendication 10, comprenant également un mélangeur configuré pour mélanger une huile de base ayant une première basicité avec un produit ayant une seconde basicité, la seconde basicité étant supérieure à la première basicité.

12. Appareil selon la revendication 11, dans lequel l'unité de commande électronique est configurée pour ajuster la basicité de l'huile de cylindre en ajustant un rapport de mélange entre l'huile de base et le produit.

13. Appareil selon la revendication 11 ou la revendication 12, dans lequel le mélangeur est configuré pour mélanger l'huile de base avec un ou plusieurs détergents lubrifiants.

14. Appareil selon l'une quelconque des revendications 10 à 13, comprenant également un agencement de capteur pour détecter les tours d'un vilebrequin et/ou comprenant un agencement de capteur pour détecter la vitesse de rotation du vilebrequin.

15. Appareil selon l'une quelconque des revendications 10 à 14, dans lequel l'appareil comprend également une pompe de dosage d'huile de cylindre (55) pour alimenter le cylindre du moteur (1) en l'huile de cylindre, et dans lequel l'unité de commande électronique est configurée pour régler le débit d'alimentation de la pompe de dosage de cylindre (55) en réponse à une charge de moteur, de préférence proportionnellement à la charge de moteur.

Fig. 1

EP 4 239 168 B1

Fig. 2

Fig. 3

= SAE 50 VI 97
= SAE 30 VI 97

Fig. 4

= SAE 50 VI 97
= SAE 30 VI 97

Fig. 5

Fig. 6

Fig. 7

# Fig. 8

Flow
rate lubrication
g/s

———— Resulting TBN of cylinder oil

----------

flow of acid neutralizing
substance equivalent to _ _ _
mg/potassium hydroxide/s

0          25          50          75          100     Eng speed (%) ⟶

EP 4 239 168 B1

# Fig. 9

Flow
rate lubrication
g/s

——————  Resulting TBN of cylinder oil

- - - - - - - - - - - -

flow of acid neutralizing
substance equivalent to   _ _ _
mg/potassium hydroxide/s

0          25          50          75          100    Eng speed (%) ⟶

EP 4 239 168 B1

**REFERENCES CITED IN THE DESCRIPTION**

**Patent documents cited in the description**

- EP 16856963
- US 2004144355 A
- EP 2767578 A1
- WO 2008073415 A2
- WO 2006069572 A1
- US 2003196632 A1